# EUROPEAN PATENT APPLICATION

(11) **EP 4 462 603 A1**
(43) Date of publication of application: **13.11.2024**
(21) Application number: 23315195.0
(22) Date of filing: 11.05.2023
(51) Int. Cl.: H01R 4/26, H01R 4/30, H01R 4/36

(54) **CLAMPING SCREW FOR CONNECTING LOW, MEDIUM, AND HIGH VOLTAGE CABLES**

(71) Applicant: Nexans, 92400 Courbevoie (FR)
(72) Inventor: Aganbegovic, Mirnes, 95032 HOF (DE); Reinhold, Christian, 08134 LANGENWEISSBACH (DE)
(74) Representative: Ipsilon

(57) **Abstract**

A clamping screw (200) for connecting the conductor with a connector piece is suggested. The clamping screw has a shaft (206), which has a tip (201) at its first end and an adapter (209) at its second end. The adapter (209) enables the engagement of a tool to screw the clamping screw (200) into the threaded hole of the connector piece. The tip is provided with a structure that is rotationally symmetrically arranged relative to a central axis of the clamping screw (200) such that the structure provides protrusions and indentations in a radial direction of the clamping screw.

## Description

### Field

The present disclosure relates to clamping screw for connecting a conductor to a connector piece.

### Background

Infrastructure for energy supply and transmission is based to a large extent on low, medium, and high-voltage cables. At present, metallic conductors of low, medium and high-voltage cables are made from copper or aluminum and are connected electrically and mechanically to each other or to other apparatuses such as transformers, generators, switchgears, overhead lines, etc. used for energy transmission and generation by means of pressing (crimping) or screwing technology. The connection to a cable end consists of a cylindrical metal sleeve into which the end of the cable core formed by a conductor is inserted. The electrical and mechanical contact is made either by pressing the sleeve onto the conductor or by clamping the conductor in the sleeve using special clamping screws. Clamping screws are used, for example, in power engineering to connect a conductor of a power cable to a connector, which can be a screw connector or a cable lug, for example. Screw connectors (briefly: connectors) are used to connect two conductors of power cables. A screw connector is designed, for example, as a solid metal tube with a through hole or two insertion holes to accommodate the conductors. Transverse to the insertion hole, threaded holes are arranged to accommodate clamping screws that clamp the conductors to be connected. To achieve and maintain a contact with good electrical conductivity and capable of resisting high tensile forces, a firm connection is required between the conductors and the screw connector into which the conductors are inserted. Test procedures for testing the connection of press and clamp connection for power lines are defined in IEC 61238 standard.

In order to meet the requirements of the IEC 61238 standard regarding the electrical and mechanical properties of the connection between the conductor of a power line and the connection sleeve a sufficiently high contact force must be applied by the clamping screw onto the conductor of the power line. Since conventional clamping screws have a flat or rounded front face or tip of pressing against the conductors, the clamping screw must be turned with a large torque to obtain the required contact force. The effort for the workers making the connection is sometimes significant and takes time. Also, it is increasingly difficult to achieve a consistently high quality of connection with an increasing torque that is needed to make a proper connection.

In view of the limitations of existing screw connectors and associated clamping screws, there remains a desire to improve one or more of the problems mentioned at the outset.

### Summary

According to a first aspect the present disclosure suggests a clamping screw for connecting the conductor with a connector piece. The clamping screw has a shaft, which has a tip at its first end and an adapter at its second end. The adapter enables the engagement of a tool to screw the clamping screw into a threaded hole of the connector piece. The tip is provided with a structure that is rotationally symmetrically (concentrically) arranged relative to a central axis of the clamping screw such that the structure provides protrusions and indentations in a radial direction of the clamping screw.

In one embodiment the protrusions and indentations can take the form of multiple single projections like peaks or dots. In another embodiment the protrusions and indentations are continuous structures in circular directions. In either case, the protrusions and indentations enhance mechanical and/or electrical properties in terms of tensile force is required to withdraw the conductor from the connector piece and to the electrical contact resistivity between the connecting piece and the conductor. Generally speaking, the quality of the connection between the conductor and the connector piece is improved.

In a preferred embodiment the protrusions and indentations are circular ridges and grooves in the tip of the clamping screw.

With advantage the grooves are cut into the tip that has a flat or rounded surface to form ridges between the grooves. High reproducibility and quality of the clamping screw can be obtained by this design.

It has been found useful when the grooves have a triangular, square, multi-edge, or rounded cross section. Different kinds of cross-sections enable adaptation of the clamping screw to different application cases, i.e. different types of cables including different conductor materials.

In a further development, grooves with different kinds of cross sections are combined in the same clamping screw. This provides a further possibility to better adapt to the clamping screw to different application cases.

Advantageously, the transition between the ridges and grooves forms an edge.

Preferably the transition between a ridge and a groove is an edge that facilitates the breaking up of the oxide layer on the surface of a conductor made from aluminum or an aluminum alloy.

In a useful embodiment the clamping screw is entirely made from aluminum or an aluminum alloy, i.e. there is no coating or tinning on the surface of the clamping screw as it is the case for conventional clamping screws. In consequence, the manufacturing of the clamping screw is simplified, and costs are reduced. The complexity of the manufacturing process for the clamping screw is reduced, too. In other embodiments the clamping screw is made from brass, copper, or other materials. The screws may have a coating or not.

According to a second aspect, the present disclosure suggests a connector piece with the clamping screw according to the first aspect of the present disclosure.

The proposed connector piece realizes the same advantages that have been described in connection with the clamping screw according to the first aspect of the present disclosure.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1A: a screw connector with shear bolt with an inserted cable;
- Fig. 1B: a cross-section of the screw connector from Fig. 1A;
- Figs. 2A,B: perspective views of a clamping screw according to the present disclosure; and
- Fig. 3: a cross section of the clamping screw shown in Figs 2A,B.

### Detailed description

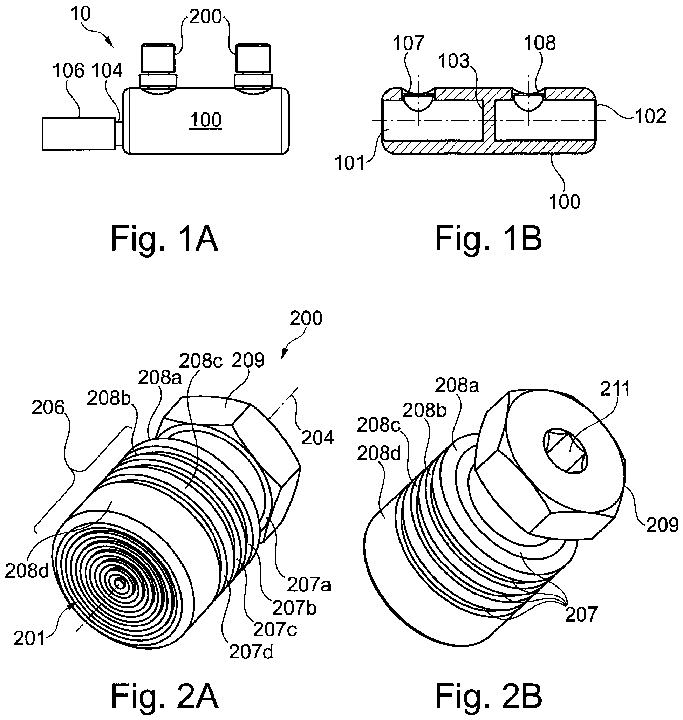

Figure 1A shows a screw connector 10 with an inserted cable in a side view and Figure 1B shows the screw connector 10 of Figure 1A in a cross-sectional view. The main components of the screw connector 10 are a connector sleeve 100 and one or several clamping screws 200. Generally, the connector sleeve 100 can be replaced by other types of connectors or lugs and is therefore also referred to as connector piece 100.

The connector sleeve 100 has one receiving hole 101, 102 at each of its end faces for conductors which are to be connected to each other by means of the screw connector 10. The receiving holes 101, 102 are separated from each other by a partition 103 to define a maximum insertion depth for the conductors. When the conductor 104 abuts against the partition 103, the person making the connection receives the haptic feedback that the inserted conductor 104 is correctly positioned. In Figure 1A, a conductor 104 belonging to an insulated line 106 is received in the receiving hole 101. The screw connector 10 further comprises one threaded hole 107,108 for each receiving hole 101, 102, which are oriented transversely to the longitudinal extension of the receiving holes 101, 102. In other embodiments there are more than one threaded hole associated with one receiving hole to enhance the mechanical and electrical properties of the connection realized by the connector. Clamping screws 200 are screwed into the threaded holes 107,108, with which conductors located in the receiving holes 101,102 can be clamped. Conventionally, the clamping screws have a flat or rounded front face. Typically, the radius of the rounded front face is significantly larger than the diameter of the clamping screw.

Many times, besides copper and copper alloys, the conductors to be connected with the screw connector 10 are made from aluminum or aluminum alloys. The conductors can be solid, segmented or stranded conductors. In any case the aluminum-based conductors are covered with a surface oxide layer consisting of aluminum oxide (e.g. Al₂O₃), which is a very good insulator. Conductors made from other materials may be covered with other impurity layers of reduced conductivity due to chemical reactions of the conductor materials. In order to achieve good electrical properties of the connection between the connector 100 and the conductor 104 it is necessary to break up the aluminum oxide or other surface layers. This can be achieved, for instance, by structured receiving holes 101, 102 to break up the surface oxide layer. This requires the clamping screws to exert a large pressure between the receiving holes 101, 102 and the conductor 104.

The standard IEC 61238 sets lower limits for the tensile forces needed to withdraw the conductor 104 from the screw connector 10. The tensile force is a function of the pressure exerted by the clamping screw 200 on the conductor 104. Typically, the tensile force corresponds to the force needed to overcome the friction force between the conductor 104 and a tip of the clamping screw 200 and/or the conductor 104 and the connector sleeve 100.

One embodiment of the clamping screw 200 according to the present disclosure is shown in Figure 2A in a perspective view exhibiting a tip 201 formed according to the new design of the clamping screw 200. In the following, the clamping screw 200 is denominated briefly as screw 200. The tip 201 is provided with the circular ridges 202 and grooves 203, which are concentric relative to a central axis 204 of the screw 200. The screw 200 is embodied as a shear off screw comprising a threaded shaft 206 that is separated by notches 207a-d into four levels namely a first level 208a, a second level 208b, a third level 208, and a fourth level 208d. At the opposite end of the tip 201 the screw 200 is provided with an outer hexagon 209 enabling the engagement of a tool, for instance a wrench, to screw the screw 200 into one of the threaded holes 107, 108. Shear off screws are generally designed to shear off when a predefined torque is reached. Depending on the thickness of the conductor 104 to be clamped in the connector sleeve 100, the first, second etc. level 208a-d is sheared off.

Figure 2B exhibits the screw 200 in a different perspective view that illustrates the outer hexagon 209 in greater detail. In particular, Figure 2B displays an inner hexagon 211 accepting another type of wrench. As it is known from conventional shear off screws commercially available e.g. from Nexans GPH ^{®}, the outer hexagon 209 is used to shear off the first and second levels 208a,b while the inner hexagon 211 is used to shear off the third and the fourth levels of the screw 200.

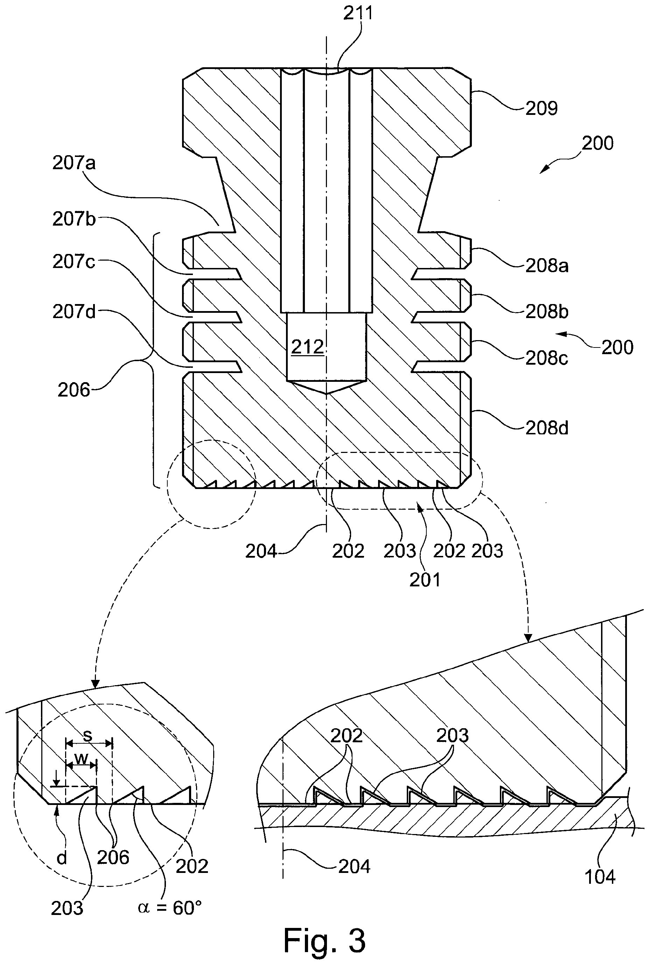

Figure 3 shows a cross-section of the clamping screw 200 illustrating in greater detail the tip 201 of the screw 200. In Figure 3 a core bore 212 for the inner hexagon is visible. More particularly, Figure 3 shows the grooves 203 which are cut into the tip 201 to create the ridges 202. In particular in the enlarged sections of Figure 3 a triangular cross section of the grooves 203 is visible. In the embodiment shown in Figure 3 the inner angle α of the triangular grooves 203 is 60°. However, in other embodiments the inner angles α are different. In other embodiments the cross-section of the grooves 203 have a square or other multi-edge cross section. In yet further embodiments the grooves have rounded cross-sections The present disclosure is not limited to a specific cross-section. However, one important aspect that is common to all designs of the proposed clamping screw 200 is that the grooves create edges 206 at the transition between the grooves 203 and the ridge 202. The edges 206 facilitate penetration of oxide layers that may cover the conductor 104.

Due to the structure of the tip 201 form by the ridges 202 and the grooves 203 the surface area of the tip being in initial contact with the surface of the conductor 104 is smaller compared with a conventional clamping screw having a flat or rounded tip. As a result, the ridges 202 penetrate any insulating oxide layer on the conductor 104 more easily than conventional clamping screws without increasing the required shear off torque. If grease is used to reduce friction of the clamping screw 200 when a connection is made, the grease is captured to a certain extent in the grooves and continues to reduce friction of the clamping screw. The dimensions of the grooves 203 i.e. their depth d and width wand the spacing s between the grooves 203 are selected such that no wires of a stranded conductor 104 are severed. In one embodiment the depth d is in the range of 0.2 to 1.0 mm, the width *w* is in the range of 0.5 to 1.5 mm, and the spacing s is in the range of 1 to 2 mm. However, these are only exemplary ranges, and the present disclosure is not limited to specific dimensions of the grooves and their spacing. At the same time the structure of the tip 201 creates an increasing deformation of the surface of the conductor 104 when the screw 200 is tightened as it is illustrated in the enlarged section on the right side on the bottom of Figure 3. In this way a sort of form locking between the tip 201 and the conductor 104 is obtained. As a result of both effects, namely penetration of oxide layer and form locking, the contact resistivity is reduced and the ability to withstand tensile forces pulling out the conductor 104 from the connector sleeve 100 is increased.

Generally speaking, the mechanical and electrical performance of a connection established with a connector sleeve 100 and the clamping screw 200 according to the present disclosure is improved. In specific embodiments, the contact resistance of a connection established with a connector sleeve 100 and the clamping screw 200 according to the present disclosure is lower by 20 to 30% compared with a clamping connection utilizing a conventional clamping screw. In terms of the IEC 61238 standard the initial resistivity factor of the new type of connection in the specific embodymennt is lower by more than 20% compared to a connection utilizing conventional clamping screws. At the same time the tensile performance is enhanced by up to 80%, i.e. much higher tensile forces are required to pull out a conductor 104 out of the connector sleeve 100 if the clamping screw 200 according to the present disclosure is used to make the connection.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 10: Clamping connector
- 100: Clamping sleeve/piece
- 101, 102: Receiving hole
- 103: Partition
- 104: Conductor

- 106: Insulated line
- 107, 108: Threaded hole

- 200: Clamping screw
- 201: Tip
- 202: Ridge
- 203: Groove
- 204: Central axis

- 206: Edge
- 207a-d: Notch
- 208a-d: Levels
- 209: Outer hexagon

- 211: Inner hexagon
- 212: Core bore

## Claims

1. Clamping screw for connecting the conductor (104) with a connector piece (100), wherein the clamping screw (200) has a shaft (206), which has a tip (201) at its first end and an adapter (209, 211) at its second end, wherein the adapter (209, 211) enables the engagement of a tool to screw the clamping screw (200) into a threaded hole (107, 108) of the connector piece (100) **characterized in that**
the tip (201) is provided with a structure that is rotationally symmetrically arranged relative to a central axis (204) of the clamping screw (200) such that the structure provides protrusions and indentations in a radial direction of the clamping screw.

2. Clamping screw according to claim 1, wherein the protrusions and indentations are circular ridges (202) and grooves (203) in the tip (201) of the clamping screw.

3. Clamping screw according to claim 1, wherein the grooves (203) are cut into the tip (201) that has a flat or rounded surface to form ridges (202) between the grooves (203).

4. Clamping screw according to claim 3, wherein the grooves (203) have a triangular, square, multi-edge, or rounded cross section.

5. Clamping screw according to claim 4, wherein grooves (203) with different kinds of cross sections are combined in the same clamping screw.

6. Clamping screw according to one or several of claims 2 or 5, wherein the transition between the ridges (202) and grooves (203) forms an edge (206).

7. Clamping screw according to one of the preceding claims, wherein the clamping screw is entirely made from a material selected for the group consisting of aluminum, copper and their alloys.

8. Connector piece (100) with the clamping screw (200) according to one or several of the preceding claims.
